# EUROPEAN PATENT SPECIFICATION

(11) **EP 2 333 180 B1**
(45) Date of publication and mention of the grant of the patent: **05.10.2016**
(21) Application number: 10161261.2
(22) Date of filing: 28.04.2010
(51) Int. Cl.: E04B 1/80, E04C 2/288

(54) **Panel for thermal insulation, particularly for construction**
Platte zur Wärmedämmung, insbesondere beim Bau
Panneau pour l'isolation thermique, en particulier pour la construction

(30) Priority: 25.11.2009 IT TV20090046 U
(43) Date of publication of application: 15.06.2011
(73) Proprietor: Silcart S.p.A., 31030 Carbonera, Frazione Mignagola TV (IT)
(72) Inventor: Faotto, Ugo, 31100 Treviso (IT)
(74) Representative: Modiano, Micaela Nadia

(56) References cited:
- WO-A1-92/16365
- US-A1- 2004 014 382

## Description

The present application refers to a panel for thermal insulation, particularly for construction.

Nowadays the cost of domestic heating or cooling has become an important part of the family economy and in the running costs of a company. This factor, combined with protection of the environment and the need to save energy, has led to an improvement in heating systems, not only in the production of heat, but especially in the thermal insulation of an air-conditioned environment.

The study and research of insulating materials has also led to an improvement in materials in favour of products with cellular structures, which generally are expanded synthetic products (polystyrene, styrene, polyurethane).

Insulating materials with cellular structures have a reduced average thermal conductivity λ [W m⁻¹ K⁻¹] owing to their very structure, of which only 3-5% by volume are formed of polymer and of which 97-95% by volume are a gaseous phase of expanding agents that is enclosed by the cells.

The small quantity of polymer and the gaseous phase limit the thermal conduction, while the small size of the closed cells limits the thermal convection between the gas and the internal surface of such cells.

The phenomenon that most impairs the performance of these cellular structures is the partial diffusion of the gaseous phase towards the outside of the panel.

Expanded polyurethane is often used nowadays because, with an average thermal conductivity coefficient λ that is lower than that of other commercial insulators (and which therefore makes it a better insulator), it makes it possible to achieve good thermal insulation using thinner panels.

Insulating panels for construction are known which comprise a cellular structure covered on both sides with a thin metal layer, generally aluminum, or coverings that are impermeable to gases and adapted to prevent the diffusion of the gaseous phase towards the outside of the panel.

The types of insulating panels containing PUR (polyurethanes) or PIR (polyisocyanurates) with gas-tight (i.e. impermeable to gas) covering are made using various different types of surfaces, for example by means of sheets of aluminum foil which are bonded, by means of thin layers of glue, to fibreglass.

This type of panel has the disadvantage of possible punching of micro-holes in the thin covering film of aluminum, caused by direct contact between such aluminum film and the fibreglass (which is normally sharp).

This fact compromises the insulating properties of the panel owing to diffusion of the gaseous phase towards the outside of the panel.

Other types of insulating panels containing PUR (polyurethanes) or PIR (polyisocyanurates) with gas-tight (i.e. impermeable to gas) covering are manufactured with the surfaces being covered with lacquered plain aluminum foil, aluminum foil bonded with plastic film, aluminum foil bonded with paper, or multilayer with aluminum film.

A drawback of the solutions just described consists in a low dimensional stability of the insulating panel, both during its production and with the passing of time, caused mainly by the absence of fibreglass inside the structure to give it dimensional rigidity.

The main drawback of all of the known solutions mentioned consists in that the gas-impermeable covering is easily perforated during installation, thus allowing the diffusion of the gases outside the panel and the compromising of its insulating capacities.

A further drawback of the cited insulating panels is their inability to be walked on and the low resistance to abrasion.

A further drawback of insulating panels of the known type consists in the incompatibility with the application of adhesives, resins, mortars etc. on the external surface, owing to the fact that the outside surface is too smooth or not suitable for the cited adhesives.

Another drawback of the solutions described above consists in that the outside covering does not protect the fire-resistant properties of the panel. This problem is aggravated by the fact that these insulating panels are often placed below membranes that require fixing with hot scarfing and therefore they undergo a thermal shock.

Another drawback consists in that the coating of the aforementioned known panels does not guarantee resistance to water and thus does not prevent the formation of algae or mould, exposing the panel to contamination.

WO 92/16365 A1 discloses an insulating sheathing panel comprising a plastic closed cell foam core having metallic foil vapor-impervious sheets adhered to opposite sides thereof, and delignified cellulose fibrous material sheets adhered to the metallic foil sheets. Layers of weather protection materials, such as polyethylene film, urethane resin, paint, water sealant coatings or aluminum foil, may also be applied to the outwardly-facing or exposed planar surface of one or both of the fibrous sheets.

US 2004/014382 A1 discloses an insulation board comprising a foam core which is strengthened and protected by two facers which are adhered to each primary opposed flat surface of the foam core. The facers comprise first plastic layers adhered to the foam core, metallized surfaces of the first plastic layers adhered to fibrous layers preferably made of paper but also of glass fiber, and second plastic layers adhered to the outer surfaces of the fibrous layers. The foam core and the two facers form the three essential layers of the insulation board whereby the facers form outer layers composed of the first and second plastic layers.

The aim of the present invention is to solve the above mentioned technical problems, eliminating the drawbacks of the cited known art, by devising a panel that possesses good insulating properties and maintains the properties of impermeability to the expanded gases over time.

This is done with a panel according to claim 1.

Within this aim, an object of the present invention is to devise a panel that has an excellent resistance to being walked on and to abrasion, in particular during laying and fixing operations.

Another object of the invention is to prevent the punching of micro-holes in any gas-impermeable aluminum film as a result of direct contact with the fibreglass.

A further object of the invention is to allow the application, on the surfaces of the panel, of adhesives, top coat plasters or mortars, for fixing the panel to other supports.

Another object of the invention is to protect and/or improve the fire-resistant properties of the panel.

Another object of the invention is to guarantee the resistance to water and to protect the panel from contamination by mould and bacteria.

In accordance with the invention, there is provided a panel for thermal insulation as defined in the appended claims.

Further characteristics and advantages of the invention will become better apparent from the following detailed description of a particular embodiment, illustrated by way of non-limiting example in the accompanying drawings, wherein:
Figure 1 is a schematic view of a panel according to the invention.
Figure 2 is a schematic view of one layer and of the direction of escape of the gaseous phase.

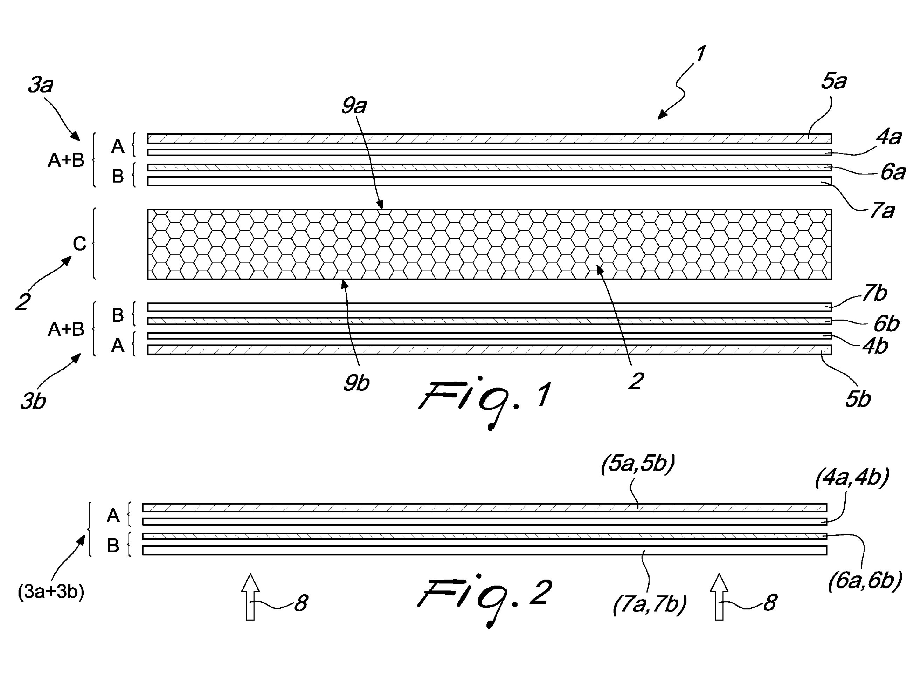

With reference to the figures, the reference numeral 1 generally designates an insulation panel whose various components, in Figure 1, are shown separated from each other for a better graphical representation.

There is thus a central body C, also designated by the reference numeral 2, constituted by an expanded insulator of preferably constant thickness.

The central body 2 is sandwiched between two layers 3a, 3b, also preferably of constant thickness.

Each of the layers 3a, 3b consists of a compound of two elements, indicated with the letters A, B. The element A is constituted by a fibreglass support 4a, 4b with a mineral covering 5a, 5b placed on the side opposite to the central body 2.

The element B is constituted by an adhesive 6a, 6b for adhesion to a covering 7a, 7b that is impermeable to gases and therefore adapted to prevent the diffusion of the gaseous phase 8 from the central body 2 towards the outside.

The elements A, B are associated with each other and with the central body 2. The apposition of the elements A, B with respect to the central body 2 is such that the upper surface 9a and the lower surface 9b of such central body 2 are placed in contact with the gas-impermeable covering 7a, 7b of the element B.

Thus a panel 1 is obtained that has a covering 7a, 7b which is impermeable to gas and therefore adapted to prevent the escape of the gaseous phase contained inside the central body 2, and a mineral covering 5a, 5b with a fibreglass support 4a, 4b that render the panel 1 structurally resistant, adapted to be handled and even walked on, and possessing excellent and long-lasting insulation characteristics.

The mineral covering 5a, 5b helps to protect the fire-resistant and impermeability properties of the panel and to prevent the formation of algae and mould, protecting the panel from contamination.

The outside mineral covering 5a, 5b constitutes a surface that is compatible with the application of adhesives, top coat plasters, resins and mortars for the application of the panels to walls, making the invention very versatile and customisable in its various applications.

It has been found that the invention has fully achieved the intended aim and objects, a panel for thermal insulation having been devised that has properties of gas-tightness (gas-impermeability), structural rigidity and dimensional stability.

Naturally the materials used, as well as the dimensions constituting the individual components of the invention, may be more pertinent according to specific requirements.

The different means for obtaining certain different functions shall not in any way coexist only in the illustrated embodiment, but in and of themselves they may be present in many embodiments, even if they are not illustrated.

The characteristics indicated as advantageous, advisable etcetera may also be missing or be substituted by equivalent characteristics.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A panel (1) for thermal insulation, particularly for construction, comprising
a central body (2), constituted by an expanded insulator with a cellular structure, and
two layers (3a,3b) between which said central body (2) is sandwiched, said two layers (3a,3b) being each composed of a first element (A) and a second element (B), said first element (A) being constituted by a fibreglass support (4a, 4b) with a mineral covering (5a, 5b) which is located on the outside of said panel (1), said second element (B) being constituted by an adhesive (6a, 6b), for adhesion to said fibreglass support (4a, 4b), and by a covering (7a, 7b) that is placed in contact with the upper surface (9a) and the lower surface (9b) of said central body (2) and that is impermeable to gases and therefore to the diffusion of the gaseous phase (8) from the central body (2) towards the outside.

2. The panel according to claim 1, **characterised in that** said central body (2) and said two layers (3a,3b) are of substantially constant thickness.

## Patentansprüche

1. Platte zur Wärmedämmung, insbesondere für das Baugewerbe, aufweisend:
einen mittleren Körper (2), der durch einen expandierten Dämmstoff mit zelliger Struktur gebildet ist, und
zwei Schichten (3a, 3b), zwischen denen der mittlere Körper (2) sandwichartig angeordnet ist, wobei die zwei Schichten (3a, 3b) jeweils aus einem ersten Element (A) und einem zweiten Element (B) aufgebaut sind, wobei das erste Element (A) durch einen Glasfaserträger (4a, 4b) mit einer mineralischen Deckschicht (5a, 5b) gebildet ist, die sich auf der Außenseite der Platte (1) befindet, und das zweite Element (B) durch einen Klebstoff (6a, 6b), der für ein Verkleben mit dem Glasfaserträger (4a, 4b) dient, und durch eine Deckschicht (7a, 7b) gebildet ist, die sich in Kontakt mit der Oberseite (9a) und der Unterseite (9b) des mittleren Körpers (2) befindet und die undurchlässig gegenüber Gasen und somit gegenüber einer Diffusion der Gasphase (8) aus dem mittleren Körper (2) nach außen ist.

2. Platte nach Anspruch 1, **dadurch gekennzeichnet, dass** der mittlere Körper (2) und die zwei Schichten (3a, 3b) im wesentlichen konstante Dicke haben.

## Revendications

1. Panneau (1) destiné à une isolation thermique, et plus particulièrement à une construction, qui comprend un corps central (2), constitué d'un isolant expansé avec une structure cellulaire, et
deux couches (3a, 3b) entre lesquelles ledit corps central (2) est pris en sandwich, lesdites deux couches (3a, 3b) étant chacune composées d'un premier élément (A) et d'un second élément (B), ledit premier élément (A) étant constitué d'un support en fibre de verre (4a, 4b) avec un revêtement minéral (5a, 5b) qui se trouve sur l'extérieur dudit panneau (1), ledit second élément (B) étant constitué d'un adhésif (6a, 6b), destiné à adhérer audit support en fibre de verre (4a, 4b), et d'un revêtement (7a, 7b) qui est mis en contact avec la surface supérieure (9a) et la surface inférieure (9b) dudit corps central (2), et qui est imperméable aux gaz et, ainsi, à la diffusion de la phase gazeuse (8) entre le corps central (2) et l'extérieur.

2. Panneau selon la revendication 1, **caractérisé en ce que** ledit corps central (2) et lesdites deux couches (3a, 3b) possèdent une épaisseur sensiblement constante.
